# EUROPÄISCHE PATENTANMELDUNG

(11) **EP 1 048 628 A1**
(43) Veröffentlichungstag der Anmeldung: **02.11.2000**
(21) Anmeldenummer: 99108440.1
(22) Anmeldetag: 30.04.1999
(51) Int. Cl.: C03C 17/32, B32B 17/10

(54) **Polymerbeschichtete Dünnglasfoliensubstrate**

(71) Anmelder: Schott Glas, 55122 Mainz (DE); CARL-ZEISS-STIFTUNG trading as Schott Glas, 55122 Mainz (DE)
(72) Erfinder: Bürkle, Roland Dr., 55268 Nider-Olm (DE); Deutschbein, Silke, 55118 Mainz (DE); Mauch, Reiner Dr., 55218 Ingelheim (DE); Sossenheimer, Karl-Heinz Dr., 55263 Wackerheim (DE); Weber, Andreas Dr., 55124 Mainz (DE)
(74) Vertreter: Fuchs Mehler Weiss & Fritzsche

(57) **Zusammenfassung**

2.1 Herkömmliche Glas-Kunststof-Verbundfolien sind speziell auf die Anforderungen ihrer weiteren Verwendung zugeschnitten. Die neue Verbundfolie soll möglichst breit einsetzbar sein und dabei ohne großen Aufwand herstellbar sein.
2.2 Gelöst wird dies durch eine Glas-Kunststoff-Verbundfolie, die eine hohe Oberflächengüte und niedrige optische Retardation aufweist. Hergestellt wird sie dadurch, daß eine Glasfolie ohne Zuhilfenahme von Klebstoff mit einem Polymer in seiner flüssigen Phase beschichtet wird.
2.3 Die Glas-Kunststoff-Verbundfolie eignet sich besonders zur Herstellung von Leuchtanzeigen auf der Basis von Flüssigkristallen oder lichtemittierenden Schichten.

## Beschreibung

Die Erfindung bezieht sich auf eine Glas-Kunststoff-Verbundfolie, insbesondere zur Verwendung in elektronischen Bauteilen und Geräten, beispielsweise Displays, aus einer Glasfolie, die eine Dicke zwischen 10 µm und 500 µm aufweist, und einer unmittelbar auf mindestens einer ihrer Seitenflächen aufgebrachten Polymerschicht, die eine Dicke zwischen 1 µm und 200 µm aufweist. Darüber hinaus bezieht sie sich auf Verfahren zur Herstellung dieser Glas-Kunststoff-Verbundfolie sowie deren Verwendung.

Flachglassubstrate eignen sich in vielen Anwendungen als geeignetes Substratmaterial, bei denen es auf Transparenz, hohe chemische und thermische Beständigkeit sowie definierte chemische und physikalische Eigenschaften ankommt. Dies sind insbesondere Anwendungsfelder, bei denen die Methoden der Dünnschicht- und Dickschichttechnik Verwendung finden, wie z.B. Displayanzeigen, Dünn- oder Dickschichtsensoren, Solarzellen, mikromechanische Bauelemente und lithographische Masken. Die Nachfrage nach neuen Produktfunktionalitäten und Anwendungsfeldern verlangt in jüngerer Zeit nach immer dünneren oder ultradünnen Substraten, die die bereits bekannten guten Eigenschaften von Glassubstraten besitzen, zum Teil aber auch neue Eigenschaften wie z.B. Biegsamkeit aufweisen. Typische Anwendungsfelder sind wiederum elektronische Anwendungen wie Sensoren oder Membranelemente.

Insbesondere bei Displays, z.B. Flüssigkristallanzeigen (Liquid Cristal Display LCD), geht der Trend zu immer ansprechenderen Designanforderungen und verlangt deshalb neue Funktionalitäten. Dies sind insbesondere ultradünne und besonders leichte Anzeigen für beispielsweise portable Taschengeräte, flexible Anzeigen für Geräte mit abgerundeter Gehäuseform wie Handys oder runde Stiftgeräte oder auch Displays für Smart-Cards oder Regalpreisschilder oder Anzeigen, die auf organischen oder anorganischen lichtemittierenden Schichten, sogenannten Light Emitting Organic Polymer Displays (OLED), beruhen.

Derartige Displays sind im allgemeinen folgendermaßen aufgebaut: Das Kernstück ist eine Zelle zur Aufnahme der Flüssigkristalle oder auch der Polymere, die mit einer Vorder- und Rückplatte versehen ist, auf die Elektroden aufgebracht sind. Bei den meisten Flüssigkristalldisplays schließen sich an die Vorder- und Rückwand der Zelle jeweils Polarisatoren an. Hinter dem rückwärtigen Polarisator ist bei reflektiven Displays eine Reflektorplatte angebracht. Im der Falle der emittierenden Polymere können die Gegenelektroden auch direkt auf den Polymer aufgedampft werden, bevor das Display mit der Rückplatte verschlossen wird. Damit die Anzeige möglichst gut funktioniert, muß gewährleistet werden, daß beispielsweise die Flüssigkristalle sich möglichst einheitlich ausrichten können und die Elektrodenpaare möglichst alle den gleichen Abstand zueinander aufweisen, da es sonst zu Verzerrungen oder örtlichen Intensitätsschwankungen des Angezeigten kommt. Ein Faktor der Einflußnahme ist die Oberflächengüte der zur Herstellung der einzelnen Komponenten benutzten Substrate.

Bevorzugte Substratmaterialien für die Herstellung der einzelnen Komponenten sind Glas und Kunststoff. Die besonderen Vorteile von Glas bestehen darin, daß es chemisch und auch photochemisch inert ist, optisch isotrop ist, temperaturbeständig ist, mechanisch stabil ist und außerdem eine harte Oberfläche besitzt. Allerdings hat es eine relativ hohe Dichte, ist spröde und daher sehr bruchempfindlich. Glasbruch während des Produktionsprozesses bringt nicht nur durch den hohen Ausschuß Verluste für den Produzenten, sondern auch durch die Tatsache, daß der Prozeß jedesmal unterbrochen werden muß, um die Maschinen von jeglichen Splittern zu reinigen.

Kunststoffe weisen eine geringere Dichte auf und sind elastisch und bruchfest, weisen aber auch diverse Nachteile auf: In den letzten Jahren wurden Substratmaterialien auf der Basis von hochwertigen Kunststoffolien für die Herstellung von Displays entwickelt und hergestellt als Ersatz für dünne Glassubstrate. Alle diese Folien benötigen aufwendige Spezialverfahren in der Herstellung zum Erreichen der benötigten Eigenschaften. Diese aufwendigen Herstellungsverfahren verteuern die Substrate erheblich. Außerdem hat sich gezeigt, daß trotz großer Entwicklungsanstrengungen die Wasser- und Dampfdurchlässigkeit solcher Substratfolien nicht ausreichend reduziert werden kann. Dies hat zur Folge, daß die Qualität und die Lebensdauer von aus solchen Substratfolien hergestellten LCD's sehr begrenzt sind. Bei den sogenannten OLED's führt der durch die Folie hindurchdiffundierende Sauerstoff zu einer Oxidation der organischen Halbleiterschichten und der aus unedlen Metallen bestehenden Elektroden und somit ebenfalls zu einer Herabsetzung der Lebensdauer der Anzeigen. Bei der Verwendung von Kunststoff als Displayschutzscheibe setzt die Kratzeranfälligkeit die Lebensdauer herab.

In Anlehnung an die Sicherheitsglasindustrie wird versucht, die günstigen Eigenschaften des Glases mit den guten Eigenschaften des Kunststoffes zu verbinden: In der DE-OS 36 15 277 A1 werden Glasscheiben mit Kunststoff als Splitterschutz durch Aufschmelzen beschichtet. In der DE-OS 31 27 721 A1 werden Kunststoffscheiben beschrieben, die als Kratzerschutz mit Glasfolien beschichtet werden, wobei das Beschichten unter Einwirkung von Druck und/oder Wärme geschieht, vorzugsweise aber unter Verwendung einer dazwischengelegten Schmelzklebefolie.

In Analogie dazu sind im Displaytechnikbereich mehrere Beispiele bekannt, die Eigenschaften von Glas und Kunststoff zu kombinieren. Ein Ansatz Glas mit einer Kunststoffschutzschicht zu versehen, ist aus der koreanischen Offenlegungsschrift KR-A 98-3695 bekannt. Das Glas wird höchstwahrscheinlich durch Ätzen auf die gewünschte Dicke gebracht und die Kunststoffschutzschicht soll nun die vom Ätzen verursachten Poren schließen sowie als Bruchschutz dienen. Die Bruchschutzfunktion besteht vor allem darin, daß die Propagation von bereits bestehenden Mikrorissen verhindert wird. Außer der Angabe, daß es sich um ein Harz aus der Gruppe der Duroplaste handelt, wird nicht näher auf die Auswahl des Polymers eingegangen. Auch wie die Schutzschicht aufgebracht wird, ist nicht näher offenbart. Geht man von den zum Zeitpunkt der Anmeldung dieser Schrift gängigen Glasdicken für die Verwendung in der Displayherstellung aus, die damals typischerweise zwischen 0,55 mm bis 1,1 mm lagen, und der geätzten Glasoberfläche, genügen die dort erzeugten Glas-Kunststoff-Verbundmaterialien den heutigen Anforderungen für Displayanwendungen nicht.

Bezüglich der Herstellung von Polarisatorfolien wird in der DE-OS 196 06 386 A1 eine gereckte, optische aktive Farbstoffolie aus Kunststoff beschrieben, die zur mechanischen Stabilisierung auf eine Glasfolie durch Pressen, Schmelzen, bevorzugt Kleben aufgebracht wird. Der Klebstoff dient dabei einer zusätzlichen mechanischen Stabilisierung der Farbstoffolie. Die Glasfoliendicken bewegen sich zwischen 10 und 200 µm, die Farbstoffoliendicken zwischen 5 und 60 µm.

Das Aufbringen der Farbstoffolie ist nicht unproblematisch: Beim Pressen ist der Ausschuß durch Glasbruch sehr hoch, das Schmelzen ist ein aufwendiger Vorgang, der die Eigenschaften der Farbstoffolien negativ beeinflussen kann, das Kleben ist mit den folgenden Nachteilen behaftet: Der Prozeß des Verklebens von Folien, hier einer Polymerfolie mit einer Glasfolie, wird auch Laminieren genannt. Das Laminieren geschieht im allgemeinen unter der Anwendung von Druck mittels Walzen. Dadurch kommt es zu einer erheblichen Belastung der Glasfolie, was insbesondere bei sehr dünnen Folien zum Bruch oder zur Schädigung, z.B. Kratzer an der Oberfläche, der Glasfolie führt. Es sind mindestens vier separate Herstellungsprozesse notwendig, die Dünnglasherstellung, die Folienherstellung, die Kleberbeschichtung und der eigentliche Laminiervorgang, was zu erheblichen Kosten führt. Außerdem sind hohe Ansprüche an die Klebe- und Laminiertechnik zu stellen, da das Produkt, insbesondere bei Displayanwendungen, keine Luft- und Staubpartikel enthalten darf. Bei der Auswahl der Kleber ist zu berücksichtigen, daß sie in der Regel eine nur begrenzte Temperatur- und Lösungsmittelbeständigkeit aufweisen. Eine homogene Dicke des Glaslaminates kann aufgrund von Dickenschwankungen in der duktilen Kleberschicht nicht im ausreichenden Maße garantiert werden.

Die Verwendung von Polymerfolien an sich ist problematisch, da sie im Laminat aufgrund ihres hohen Vernetzungsgrades bei Temperaturschwankungen erhebliche Druck- und Zugspannungen aufbauen. Die thermischen Ausdehnungskoeffizienten von Kunststoffen sind nämlich eine Größenordnung höher als die von Glas. Darüber hinaus weisen alle Polymerfolien nach Temperaturzyklen bis in die Nähe der Glasübergangstemperatur der Kunststoffe erheblichen irreversiblen Schrumpf auf, der zu einem dauerhaften Verziehen der Laminate führt. Dieser Effekt ist häufig inhomogen und kann bei gereckten Folien anisotrop sein.

Weiterhin zeigen Polymerfolien in der Regel eine nicht unerhebliche optische Retardation (Doppelbrechung), die deutlich über 20 nm liegt. In Displays, die den Doppelbrechungseffekt von Flüssigkristallen ausnutzen, ist eine optische Anisotropie der Folie nicht zulässig. Die laterale Doppelbrechung Δn einer Folie ergibt sich aus der Differenz der Brechungsindizes parallel und senkrecht zu der Prozeßrichtung der Folien. Die optische Retardation γ einer Folie mit der Dicke d ergibt sich hieraus aus dem Produkt aus der Differenz der Brechungsindizes parallel und senkrecht zu der Prozeßrichtung der Folien und Foliendicke.

Für LCD-Anwendungen, die die Doppelbrechung des Flüssigkristalls ausnutzen, sind nur Substrate bzw. Substratfolien mit einer optischen Retardation < 20 nm verwendbar. Die meisten kommerziell erhältlichen gezogenen Folien weisen aber ein Vielfaches dieses Wertes auf. Es sind nur wenige Folien erhältlich, die diesen Wert unterschreiten, welche aber aufgrund aufwendigerer Herstellungsverfahren sehr teuer sind.

Bei sehr dünnen Polymerfolien kommt hinzu, daß sie in einem Laminierprozeß nur sehr schwer zu handhaben sind und daher zu schlechten Ausbeuten führen. Sie sind nur schwer verzugsfrei zu laminieren, was zu zusätzlichen Spannungen und zum Verziehen des Laminates führen kann. Folienlaminate mit Polymerfoliendicke < 25 µm lassen sich großtechnisch und wirtschaftlich kaum noch herstellen.

In der japanischen Offenlegungsschrift JP-A 4-235527 wird ein Kunststoffsubstrat beschrieben, auf das eine Glasfolie aufgebracht wird, um die Oberflächengüte des Kunststoffsubstrates dahingehend zu verbessern, daß eine elektrisch leitende Schicht zum Anbringen von Elektroden darauf aufgebracht werden kann. Als Material für das Kunststoffsubstrat werden transparente Epoxyharze bevorzugt. Die Substratdicke kann 100 µm bis zu 10 mm betragen, je nach beabsichtiger Anwendung, insbesondere bei Abhängigkeit von der Größe der Fläche der zu produzierenden Anzeige. Die Dicke der Glasfolie bewegt sich zwischen 10 µm und 500 µm. Entweder werden die Glasfolie und das Kunststoffsubstrat miteinander verklebt oder das Harz wird auf das Glas aufgegossen. Beim Verkleben ergeben sich die schon genannten Probleme, die die optischen Eigenschaften und die Oberflächengüte des Endproduktes negativ beeinflussen können.

Bei allen bisher vorgestellten Endprodukten ist durch das Endprodukt selbst schon vorgegeben, welche Seite weiterprozessiert wird und wie sie weiterprozessiert werden kann. In der JP-A 4-235527 wird zum ersten Mal versucht, dem abzuhelfen, indem auf beide Seiten des Kunststoffsubstrates eine Glasfolie angebracht wird. Dazu werden allerdings mindestens ein Prozeßschritt, beim Verkleben sogar mindestens zwei weitere Prozeßschritte, sowie mehr Material benötigt. Es ist also bedeutend aufwendiger, ein Endprodukt herzustellen, dessen beide Seiten weiterprozessiert werden können.

Aufgabe der vorliegenden Erfindung ist es also, eine Folie bereitzustellen, die möglichst breit einsetzbar ist, insbesondere in der Displayherstellung als Grundlage für die Herstellung aller Komponenten, wie z.B. der Flüssigkristallzelle, der Zelle zur Aufnahme der lichtemittierenden Schicht in OLEDs oder auch der Elektrodenschicht. Dabei sollte sie nicht nur heutigen, sondern auch zukünftigen Ansprüchen an die Foliengüte genügen und die vorteilhaften Eigenschaften sowohl von Glas als auch von Kunststoff aufweisen. Das Herstellungsverfahren sollte dabei mit möglichst wenigen Schritten auskommen und möglichst unaufwendig sein.

Diese Aufgabe wird gelöst durch eine Glas-Kunststoff-Verbundfolie, die sich dadurch auszeichnet, daß mindestens eine Seitenfläche an ihrer Oberfläche eine Welligkeit (auch Waviness) geringer als 100 nm und eine Rauhigkeit R_{T} < 30 nm aufweist und daß die optische Retardation nicht mehr als 20 nm beträgt.

Außerdem wird diese Aufgabe gelöst durch die beiden folgenden Verfahren:

Das erste Verfahren umfaßt die Schritte Herstellen einer Glasfolie einer Dicke von 10 bis 500 µm im Down-draw-Prozeß mit einer Ziehgeschwindigkeit von 2 bis 12 m/s, Vorbehandeln der Glasfolienoberfläche, direktes Aufbringen einer 1 bis 200 µm dicken Polymerschicht in der flüssigen Phase und Vereinzeln der polymerbeschichteten Glasfolie.

Das zweite Verfahren umfaßt dieselben Schritte, wobei die Glasfolie schon nach dem Herstellen und vor dem Vorbehandeln ihrer Oberfläche und dem Aufbringen des Kunststoffes vereinzelt wird.

Durch die Verfahren ist es im Gegensatz zu den bereits bekannten Laminierverfahren möglich, sehr dünne und homogene Polymerfilme auf der Glasfolie zu erzeugen.

Die erfindungsgemäße Glas-Kunststoff-Verbundfolie ist im Falle der Displayherstellung wegen ihrer hohen Oberflächengüte sowohl für die Weiterprozessierung zu einer Polarisatorfolie als auch zu einer Trägerplatte für Elektroden als auch die Verwendung als äußerste Schutzscheibe geeignet. Durch die Kunststoffschicht ist die Folie bruchfest und zugleich leichter, durch die Glasfolienschicht ist sie kratzfest, hart, mechanisch stabil und chemisch inert. Je nachdem, ob die Glasseite oder die Kunststoffseite weiter bearbeitet wird, dient entweder die Kunststoffseite als Bruchschutz oder die Glasseite als Kratzschutz. Durch die geringe Doppelbrechung eignet sich die erfindungsgemäße Glas-Kunststoff-Verbundfolie besonders für die Verwendung in optoelektronischen Bauteilen und Geräten. Die hohe Oberflächengüte der Verbundfolie ist besonders für die Herstellung von Flüssigkristallzellen und Leuchtanzeigen auf der Basis lichtemittierender Schichten von Bedeutung. Rauhe Oberflächen können nämlich zu Fehlstellen in der Anzeige führen, da rauhe Oberflächen leicht zu einer uneinheitlichen Ausrichtung der Flüssigkristalle in den aufgebrachten Orientierungsschichten führen können. Welligkeiten führen zu Schichtdickenschwankungen in der aktiven Schicht (z.B. Flüssigkristall) und damit zu einer inhomogenen Displayanzeige.

Die Rauhigkeit R_{T}, auch Rauhtiefe genannt, wird nach DIN 4762 Teil 1-08.60. bestimmt und entspricht dem maximalen Abstand zwischen Profilkuppe und Profiltal innerhalb einer Bezugsstrecke. Sie ist nicht zu verwechseln mit der Rauhigkeit R_{A}, die dem arithmetischen Mittel aller Abstände entspricht und in der Regel nur einen Bruchteil von R_{T} beträgt. Die Rauhigkeit beschreibt den kurzwelligen Anteil der Abweichung von einer ideal ebenen Oberfläche, während die Welligkeit (gemessen nach DIN/ISO 11562 mit einem cut-off von 0,8 bis 8,0 mm und 2CRPC 50-Filter) Abweichung mittlerer Wellenlänge erfaßt.

In einer besonders bevorzugten Ausführungsform weisen beide Seiten der Glas-Kunststoff-Verbundfolie die hohe Oberflächengüte einer Welligkeit geringer als 100 nm und einer Rauhigkeit R_{T} geringer als 30 nm auf. Dadurch ist die Glas-Kunststoff-Verbundfolie noch vielseitiger einsetzbar, da sie auf beiden Seiten gleichermaßen weiterprozessierbar ist, bzw. auch die Möglichkeit eröffnet wird, sie beidseitig weiterzuprozessieren.

Um eine möglichst leichte, möglichst dünne und vor allem mit höchster Oberflächengüte ausgestattete Glas-Kunststoff-Verbundfolie zu erhalten, ist es unerläßlich, daß sie tatsächlich nur aus dem Polymer und der Glasfolie besteht und keinerlei Klebstoffschicht aufweist.

Gerade im Bereich der optoelektronischen Anwendungen ist die optische Retardation vorteilhafterweise ≤20 nm, bevorzugt ≤15 nm, um ein Verzerren der optischen Signale durch die Verbundfolie zu unterdrücken.

Im Hinblick auf das Verringern des Gewichtes und der Dicke von Displays sind die Glasfolienschichten bevorzugt 10 bis 400 µm, besonders bevorzugt 10 bis 200 µm und ganz besonders bevorzugt 10 bis 100 µm dick sowie die Polymerschicht bevorzugt 2 bis 100 µm, besonders bevorzugt 2 bis 50 µm dick und beträgt die optische Retardation nicht mehr als 15 nm.

Da ein großer Anteil des Glasbruches bei Glasfolien auf Mikrorisse, die an den Kanten ihren Ausgang nehmen, zurückzuführen sind, ist es vorteilhaft, daß mindestens eine Kante der Glas-Kunststoff-Verbundfolie gänzlich mit dem Kunststoff bedeckt ist. Dadurch wird sowohl das Entstehen neuer Risse als auch die Propagation bereits bestehender Risse verhindert.

Um die Glas-Kunststoff-Verbundfolie gegen punktuelle Belastung, wie z.B. Stöße mit spitzen Gegenständen unempfindlicher zu machen, hat es sich als vorteilhaft erwiesen, die Polymere für die Kunststoffschicht derart auszuwählen, daß ihr Elastizitätsmodul <5.000 N/mm², bevorzugt <2.600 N/mm², ganz besonders bevorzugt < 1.500 N/mm² ist. Die auftretende Spannungsbelastung wird durch die Polymerschicht auf eine größere Fläche verteilt und wesentlich verringert.

Das Elastizitätsmodul einer sehr dünnen Kunststoffschicht kann aus Krafteindringtiefenmessungen bestimmt werden. Dazu wird ein Prüfkörper definierter Geometrie, im allgemeinen ein pyramidal geschliffener Diamant, mit wachsender Last in die Oberfläche eingedrückt und anschließend wieder entlastet. Der Elastizitätsmodul ergibt sich dabei aus der Steigung der Entlastungsgeraden (Eindringtiefe in Abhängigkeit von der Last). Die Messungen werden mit einem sogenannten Pikoindentor durchgeführt, mit dem sehr kleine Eindrucktiefen zwischen 10 und 100 nm realisiert werden können. Dies ist notwendig, da, wenn die Eindringtiefe ca. 10 % der Schichtdicke überschreitet, das Substrat die Messung zu beeinflussen beginnt.

Als besonders vorteilhaft hat sich erwiesen, ein Polymer für die Kunststoffschicht derart auszuwählen, daß die Transmission der Glas-Kunststoff-Verbundfolie mehr als 90 % der unbeschichteten Glasfolie beträgt und die Trübung durch die Polymerbeschichtung um weniger als 1 % verglichen mit der unbeschichteten Glasfolie zunimmt.

Um möglichst viele Möglichkeiten zur Weiterprozessierung der Glas-Kunststoff-Verbundfolie zu haben sowie eine hohe Lebensdauer der auf Basis der Glas-Kunststoff-Verbundfolie hergestellten Produkte zu gewährleisten, ist die Glas-Kunststoff-Verbundfolie vorteilhafterweise bis zu 130°C dauertemperaturbeständig (über mehrere Stunden), und bis zu 140°C, bevorzugt 180°C, besonders bevorzugt 200°C, kurzzeittemperaturbeständig (einige Minuten).

Als besonders vorteilhaft für die Herstellung von LCD- und OLED-Displays haben sich Glas-Kunststoff-Verbundfolien herausgestellt, die auf ihren Oberflächen eine Rauhigkeit R_{T} < 10 nm, besonders bevorzugt < 3 nm und eine Welligkeit < 80 nm aufweisen.

Bevorzugte Materialien, um optimale Glas-Kunststoff-Verbundfolien zu erhalten, sind Siliconpolymer, Sol-Gel-Polymer, Polycarbonat, Polyethersulfon, Polyacrylat, Polyimid, Cycloolefincopolymer oder Polyarylat für die Kunststoffschicht und Borosilikatglas, bevorzugt alkalifreies Borosilikat für die Glasschicht.

Um eine Glas-Kunststoff-Verbundfolie herzustellen, muß erst die Glasfolie selbst hergestellt werden. Um eine Glasfolie der benötigten Oberflächengüte herzustellen, sollte dies im Down-draw-Prozeß geschehen mit Ziehgeschwindigkeiten zwischen 2 und 12 m/s. Die Oberflächengüte der Glasfolie ist Voraussetzung für das Erreichen einer entsprechenden Oberflächengüte auf der Kunststoffseite der Glas-Kunststoff-Verbundfolie. Nach dem Herstellen der Glasfolie kann diese entweder direkt weiterbehandelt werden oder, falls die Schritte des Vorbehandelns der Glasfolienoberfläche und des Aufbringens der Polymerschicht räumlich von der Glasfolienherstellung getrennt sind, erst vereinzelt werden, was bei der Herstellung kleinerer und mittlerer Mengen zu bevorzugen ist. Das Vorbehandeln der Glasfolienoberfläche geschieht, um ein gutes Haften der Polymerschicht zu gewährleisten.

Durch das direkte Aufbringen eines Polymers auf die Glasfolienoberfläche ohne Klebstoff, und zwar in der flüssigen Phase, wird erreicht, daß die Oberfläche der Polymerschicht sozusagen die Oberfläche der Glasfolie abbildet und deren exzellente Oberflächengüte aufweist. Sind das Herstellen der Glasfolie sowie das Vorbehandeln und Beschichten als kontinuierlicher Prozeß geplant, wird die polymerbeschichtete Glasfolie nun vereinzelt.

Durch das Aufbringen in der flüssigen Phase auf die starre Glasfolie ist außerdem gewährleistet, daß sich in dem Polymerfilm keine Verzugsrichtung ausbildet und somit die optische Retardation des Polymerfilms und damit der Verbundfolie weniger als 20 nm beträgt.

Ist die Glasfolie vor dem Beschichten vereinzelt worden und möchte man extrem dünne Polymerschichten erreichen, geschieht das Beschichten vorzugsweise durch Schleudern oder Sprühschleudern. Beschichtungsmethoden, die sich auch für einen kontinuierlichen Prozeß eignen, sind das Aufgießen, das Aufwalzen oder das Sprühen. Zum Aufbringen der Polymerschicht auf beide Seitenflächen der Glasfolie wird das Tauchen bevorzugt.

Zur Erhöhung der Bruchfestigkeit sollte mindestens auch eine Kante der Folie mitbeschichtet werden. Im kontinuierlichen Prozeß werden die Kanten parallel zur Ziehrichtung beschichtet, bei vereinzelten Folienstücken können alle vier Kanten beschichtet werden.

Vorteilhaft im Hinblick auf die Eigenschaften der herzustellenden Glas-Kunststoff-Verbundfolie sind die Verwendung von Glasfolien von 10 bis 400 µm, bevorzugt 10 bis 200 µm und besonders bevorzugt 10 bis 100 µm sowie das Aufbringen von Polymerschichten von 1 bis 200 µm, bevorzugt 2 bis 100 µm und besonders bevorzugt 10 bis 85 µm.

Um die Haftung der Polymerschicht auf der Glasfolie zu erhöhen, werden die besten Ergebnisse erzielt durch Oberflächenbehandlung durch UV-Bestrahlung der Glasfolienoberfläche in einer ozonhaltigen Atmosphäre, durch Corona-Behandlung oder auch durch Beflammen.

Zum Unterstützen des Aushärtens der Polymerschicht sollte die Folie mit ultraviolettem Licht bestrahlt werden und/oder unter Wärmeeinwirkung getrocknet werden.

Glas-Kunststoff-Verbundfolien mit besonders guten Eigenschaften erhält man, wenn als Polymer entweder Siliconpolymer oder Sol-Gel-Polymer oder Polycarbonat oder Polyethersulfon oder Polyacrylat oder Polyimid oder Cycloolefincopolymer oder ein Polyarylat verwendet werden. Weiterhin ist für dieses Verfahren vor allen Dingen die Verwendung von Borosilikatglas, vorzugsweise alkalifreies Borosilikatglas für die Glasfolienherstellung vorteilhaft.

Geschützt werden soll außerdem die Verbindung der erfindungsgemäßen Glas-Kunststoff-Verbundfolie zur Herstellung elektronischer Bauteile und optoelektronischer Geräte, insbesondere auf der Basis von Flüssigkristallen oder lichtemittierenden Schichten.

Die Erfindung soll anhand der
- Fig. 1: Schnitt durch die Glas-Kunststoff-Verbundfolie an einer Kante und
- Fig. 2: Produktionsstraße zur Herstellung der Glas-Kunststoff-Verbundfolie sowie
anhand der darauf folgenden Beispiele erläutert werden.

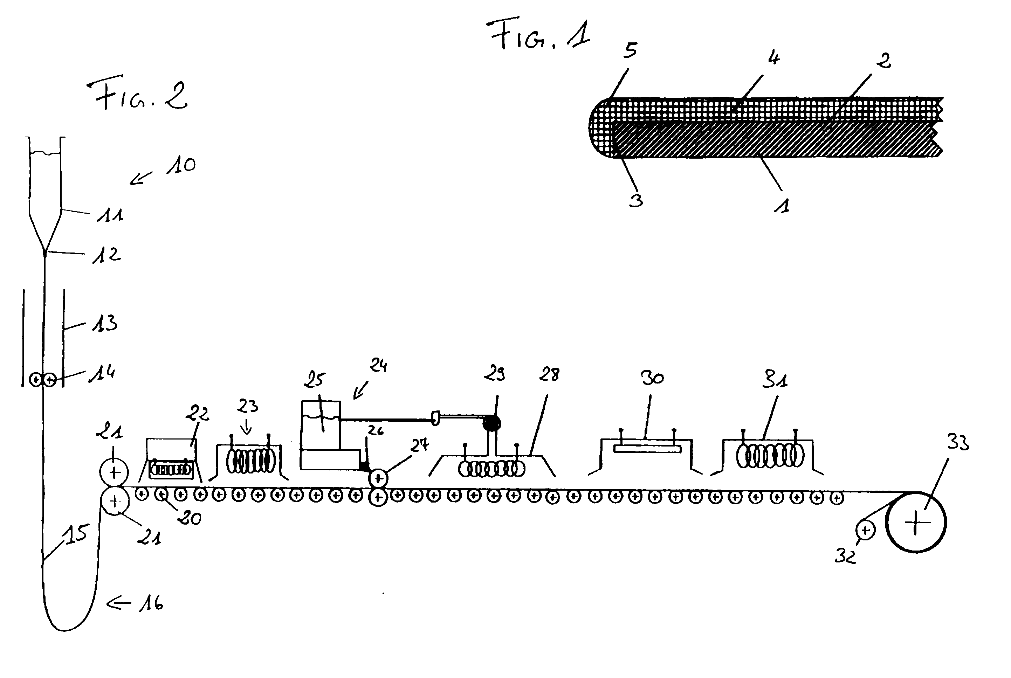

Fig. 1 zeigt einen Schnitt durch die Glas-Kunststoff-Verbundfolie an einer ihrer Kanten. Auf die Glasfolie 1 ist direkt auf die Glasfolienoberfläche 2 ein Polymerfilm 4 aufgebracht. Dieser Polymerfilm 4 erstreckt sich über die Glaskante 3 hinaus und bildet daher einen Randwulst 5, der die Glaskante 3 vollständig bedeckt. Auf diese Weise ist auch die Kante der Glas-Kunststoff-Verbundfolie vor Stößen geschützt und wird eine Propagation von möglicherweise in der Kante existierenden Mikrorissen in der Kante verhindert.

Fig. 2 zeigt eine mögliche Produktionsstraße zur Herstellung der Glas-Kunststoff-Verbundfolie. Im Glaszug 10 wird im sogenannten modifizierten Down-draw-Verfahren die Glasfolie 15 hergestellt, indem in einem Heißformungsschritt die Glasfolie 15 vertikal aus dem Glastank 11 und der Ziehdüse 12 gezogen und auf der Kühlstrecke 13 gegebenenfalls nachgeformt wird. Durch die direkte Ankopplung der Beschichtungsstrecke erhält man eine minimale Kontamination und Oberflächenveränderung der Glasoberfläche vor der nachfolgenden Beschichtung, was besonders günstig für die Haftfähigkeit der Polymerschicht ist. Durch eine minimale Anzahl von Behandlungs-, Transport- und Zwischenlagerschritten wird außerdem die Erzeugung von Oberflächenverletzungen und Partikelkontamination auf ein Minimum reduziert. Um eine Anpassung der Prozeßgeschwindigkeiten und eventueller Toleranzen ausgleichen zu können, ist nach dem Glaszug 10 eine Pufferstrecke 16 in Form einer Schleife vorgesehen, wodurch man eine Entkopplung des Glaszieh- und des Beschichtungsprozesses erreicht. Durch das weitgehend freie Hängen der Glasfolie 15 wird eine unzulässige Verspannung der Glasfolie 15, die zu einem Abreissen führen kann, sowie eine Verunreinigung der Glasoberfläche verhindert.

Die Glasfolie 15 wird im weiteren Verlauf horizontal über Transportrollen 20 geführt und über Traktionsrollen 21 in ihrer Zugspannung geregelt, um eine gleichmäßige Transportgeschwindigkeit und Zugspannung zu gewährleisten und ein Abreissen der Glasfolie 15 zu verhindern. Die zu beschichtende Oberfläche wird in dem Oberflächenbehandlungsaggregat 22 durch UV-Bestrahlung in Ozonatmosphäre behandelt. Zur Einstellung der erforderlichen Glastemperatur vor dem Aufbringen des Polymers befindet sich vor dem Beschichtungsmodul 24 eine Temperiereinheit 23, die das Glasband auf eine genau definierte, homogene Temperatur vorheizt. Das Aufbringen der Beschichtung erfolgt durch das Beschichtungsmodul 24. Dabei fließt das Polymer 25 durch die Flachdüse 26 auf die Übertragerwalze 27 und wird durch diese auf die Glasfolie unter Anwendung von minimalem Druck (< 1 kg/cm²) aufgewalzt. In der ersten Trockenstrecke 28 wird das Lösungsmittel zum Verdunsten gebracht. Das verdunstete Lösungsmittel wird nach einer Aufbereitung bzw. Reinigung in den Prozeß zurückgeführt, um so die Umweltbelastung und den Verbrauch zu reduzieren. Eine erhöhte Temperatur der Glasfolie 15 bewirkt dabei ein schnelles Verdampfen des Lösungsmittels ohne die Bildung einer oberflächlichen Trockenhaut, die ein Verdampfen des im Volumen eingeschlossenen Lösungsmittels verhindern würde. Die Aushärtung und Trocknung der Polymerschicht geschieht in der UV-Belichtungsstrecke 30 und der zweiten Trocknungsstrecke 31. Am Ende der Strecke folgt eine Aufwickeleinheit 33 mit einem Zwischenlagenabroller 32, von dem eine Zwischenlage zwischen die Glas-Kunststoff-Verbundfolienlagen eingewickelt wird. Danach wird die Glas-Kunststoff-Verbundfolienrolle zur Vereinzelungsanlage gebracht.

### Ausführungsbeispiel 1

### Herstellung eines Glas/Polysilicon-Verbundes 100 µm/40 µm durch Walzlackierung

Verwendet wird eine Glasfolie aus Borosilikatglas des Glastypes D 263 (Firmenschrift der Fa. Schott-DESAG) mit einer Dicke von 100 µm, die mit dem Glasziehprozeß Down-draw hergestellt wird bei einer Ziehgeschwindigkeit des Glasbandes von 5,5 m/min. Die Oberfläche des Glassubstrates hat eine Welligkeit von 60 nm und eine Rauhigkeit R_{T} von 9 nm. Die Oberfläche des Glasbandes wird mit einer Corona-Behandlung aktiviert. Die Multimesser Metallelektrode hat eine Breite von 500 mm und der Abstand von der Elektrode zur Glasoberfläche beträgt 2 mm. Die Frequenz beträgt 30-50 kHz (automatische Frequenzregelung) und die Leistung 150 W. Der mit einem Walzlackierverfahren aufgebrachte zweikomponentige Siliconpolymerfilm auf Basis von Polydimethylsiloxan (Produktname Elastosil, Mischungsverhältnis beider Siliconkomponenten 9:1) hat eine Dicke von 40 µm. Der Walzendurchmesser beträgt 238 mm und die Walzenlänge 550 mm bei einem mittleren Anpreßdruck von 0,5 kg/cm². In einem nachfolgenden Temperprozeß wird das siliconbeschichtete Glasband bei 150°C, 10 min gehärtet und anschließend vereinzelt. Das Elastizitätsmodul der Siliconschicht beträgt 1100 N/cm² und die Oberfläche weist eine Welligkeit von 50 nm und eine Rauhigkeit von 20 nm auf. Durch die Walzlackierbeschichtung sind die parallel zur Walzrichtung liegenden Seitenkanten mit dem Siliconpolymer bedeckt. Die optische Retardation beträgt 15 nm.

### Ausführungsbeispiel 2

### Herstellung eines Glas/Polysilicon-Verbundes 50 µm/2 µm durch Schleuderverfahren

Verwendet wird eine Glasfolie aus einem alkalifreien Borosilikatglas AF 45 (Firmenschrift der Fa. Schott-DESAG) mit einer Foliendicke von 50 µm, Welligkeit von 80 nm und Rauhigkeit R_{T} 4 nm, die im Down-draw-Prozeß mit einer Ziehgeschwindigkeit von 10 m/min hergestellt wird. Die Foliengröße beträgt 300x200 mm². Das Glassubstrat wird durch einen Waschprozeß gereinigt und anschließend durch eine UV-Ozonbehandlung (Amalgam-Niederdruckstrahler, 500 W), bei 184,9 nm zur Bildung von Ozon, bei 253,7 nm zur Bildung von Sauerstoffradikalen an der Oberfläche 5 min aktiviert. Mit einem Schleuderverfahren (Umdrehungen 2400 l/min) wird die Glasfolie mit einem einkomponentigen Polydimethylsilicon (in Hexan gelöst mit einem Masseverhältnis Polymer/Hexan von 1:21) beschichtet und anschließend bei 120°C 15 min in einem Umluftofen getrocknet. Die Schichtdicke beträgt 2 µm. Durch die Schleuderbeschichtung sind alle 4 Seitenkanten mit dem Siliconpolymer bedeckt. Das Elastizitätsmodul der Siliconschicht beträgt 500 N/mm² und die Oberfläche weist eine Welligkeit von 67 nm und eine Rauhigkeit R_{T} von 9 nm auf. Die optische Retardation beträgt 5 nm.

### Ausführungsbeispiel 3

### D 263 Glas/Polycarbonat-Verbund 145 µm/3 um mit Schleuderverfahren

Verwendet wird eine Glasfolie des Glastypes D 263 (Firmenschrift der Fa. Schott-DESAG) als Glassubstrat mit einer Dicke von 145 µm, das mit dem Down-draw-Prozeß mit einer Ziehgeschwindigkeit von 4,2 m/min hergestellt wird, wobei die Welligkeit 28 nm, die Rauhigkeit R_{T} 8 nm beträgt. Das Glassubstrat wird durch einen Waschprozeß gereinigt und anschließend durch eine UV-Ozonbehandlung (Amalgam-Niederdruckstrahler, 1000 W), bei 184,9 nm zur Bildung von Ozon, bei 253,7 nm zur Bildung von Sauerstoffradikalen an der Oberfläche 5 min aktiviert. Mit einem Schleuderverfahren (Umdrehungen 1400 l/min) wird die Glasfolie mit einem Polycarbonatfilm (Polycarbonat/Methylenchloridlösung, Masseverhältnis 1:19) beschichtet und anschließend bei 80°C 20 min in einem Umluftofen getrocknet. Die Schichtdicke beträgt 3 µm. Durch die Schleuderbeschichtung sind alle 4 Seitenkanten mit dem Polycarbonatfilm bedeckt. Das Elastizitätsmodul der Polycarbonatschicht beträgt 1350 N/mm² und die Oberfläche weist eine Welligkeit von 30 nm und eine Rauhigkeit R_{T} von 9 nm auf. Die optische Retardation beträgt 9 nm.

### Ausführungsbeispiel 4

### AF 45 Glas/Polvethersulfon (PES) 200 µm/85 µm durch Extrudierverfahren

Verwendet wird eine Glasfolie aus einem alkalifreien Borosilikat AF 45 (Firmenschrift der Fa. Schott-DESAG) mit einer Foliendicke von 200 µm. Die Oberfläche des Glassubstrates hat eine Welligkeit von 55 nm und eine Rauhigkeit (R_{T}) von 7 nm. Die Ziehgschwindigkeit des Glasbandes beträgt 2,8 m/min.

Die Oberfläche des Glasbandes wird mit einer Corona-Behandlung aktiviert. Die Stabelektrode hat eine Breite von 500 mm und der Abstand von der Elektrode zur Glasoberfläche beträgt 4,5 mm. Die Frequenz beträgt 30-50 kHz (automatische Frequenzregelung) und die Leistung 250 W. Der mit einem Extrudierverfahren mit einer Ziehgeschwindigkeit von 2,8 m/min bei 380°C aufgebrachte PES-Film hat eine Dicke von 85 µm. Der Glas-PES-Verbund wird nach 5minütiger Abkühlzeit vereinzelt. Das Elastizitätsmodul der PES-Schicht beträgt 3200 N/mm² und die Oberfläche weist eine Welligkeit von 68 nm und eine Rauhigkeit R_{T} von 15 nm auf. Durch die Extrudierbeschichtung sind die parallel zur Ziehrichtung liegenden Seitenkanten mit dem PES-Polymer bedeckt. Die optische Retardation beträgt 18 nm.

### Ausführungsbeispiel 5

### AF 45 Glas/Polyacrylat-Verbund 50 µm/10 µm durch Sprühbeschichtung

Verwendet wird eine Glasfolie aus einem alkalifreien Borosilikatglas AF 45 (Firmenschrift der Fa. Schott-DESAG) mit einer Foliendicke von 50 µm, Welligkeit 80 nm und Rauhigkeit R_{T} 4 nm, die im Down-draw-Prozeß mit einer Ziehgeschwindigkeit von 10 m/min hergestellt wird. Die Foliengröße beträgt 300x200 mm². Das Glassubstrat wird durch einen Waschprozeß gereinigt und anschließend durch eine UV-Ozonbehandlung (Amalgam-Niederdruckstrahler 500 W) bei 184,9 nm zur Bildung von Ozon, bei 253,7 nm zur Bildung von Sauerstoffradikalen an der Oberfläche 5 min aktiviert. Die 10 µm dicke Polyacrylatschicht wird mit einem Sprühverfahren von einem Acrylat-Aerosol erzeugt, wobei alle 4 Seitenkanten mit dem Polymer bedeckt sind. Als Sprühverfahren wird das High Pressure Low Volumen (HPLV) Verfahren eingesetzt. Die auf 40°C vorgewärmte 10 %ige Polyacrylatlösung in N,N-Dimethylformamid wird über eine Sprühdüse mit einem Durchmesser von 0,6 mm versprüht, wobei der Zerstäuberdruck bei 0,55 bar und der Zuführdruck der Düse bei 4 bar liegt. Das Elastizitätsmodul der Acrylatschicht beträgt 5000 N/mm² und die Oberfläche weist eine Welligkeit von 75 nm und eine Rauhigkeit R_{T} von 10 nm auf. Die optische Retardation beträgt 8 nm.

### Ausführungsbeispiel 6

### D 263 Glas/Cyclo-olefin-Copolymer (COC) 145 µm/15 µm durch Extrudieren

Verwendet wird eine Glasfolie des Glastypes D 263 (Firmenschrift der Fa. Schott-DESAG) als Glassubstrat mit einer Dicke von 145 µm, das mit dem Down-draw-Prozeß hergestellt wird, wobei die Welligkeit 28 nm, die Rauhigkeit R_{T} 8 nm beträgt. Die Oberfläche des Glasbandes wird mit einer Corona-Behandlung aktiviert. Drei hintereinander angeordnete Multimesser Metallelektroden mit einer Breite von jeweils 500 mm mit einem Abstand von 7 mm zur Glasoberfläche werden eingesetzt. Die Frequenz beträgt 30-50 kHz (automatische Frequenzvariation) und die Leistung je Metallelektrode 120 W. Die Ziehgeschwindigkeit der Glasfolie beträgt 4,2 m/min. Der 15 µm dicke COC-Film wird mit einem Extrudierverfahren mit 4,2 m/min bei 270°C aufgebracht, wobei die Glaskanten parallel zur Ziehrichtung mit dem Polymer bedeckt sind. Nach einer Abkühlzeit von 7 min wird das beschichtete Glasband vereinzelt. Die Oberfläche weist eine Welligkeit von 26 nm und eine Rauhigkeit R_{T} von 15 nm auf, das Elastizitätsmodul beträgt 2800 N/mm². Die optische Retardation beträgt 10 nm.

### Ausführungsbeispiel 7

### D 263 Glas/Polyarylat-Verbund 145 µm/3,5 µm durch Tauchverfahren

Verwendet wird eine Glasfolie des Glastypes D 263 (Firmenschrift der Fa. Schott-DESAG) als Glassubstrat mit einer Dicke von 145 µm, das mit dem Down-draw-Verfahren hergestellt wird, wobei die Welligkeit 28 nm, die Rauhigkeit R_{T} 8 nm beträgt. Die Glassubstratgröße beträgt 200x200 mm². Das Glassubstrat wird durch einen Waschprozeß gereinigt und anschließend durch eine UV-Ozonbehandlung (Amalgam-Niederdruckstrahler, 1000 W) bei 184,9 nm zur Bildung von Ozon, bei 253,7 nm zur Bildung von Sauerstoffradikalen an der Oberfläche 5 min aktiviert. Das Polyarylat wird im Ofen bei 130°C vorgetrocknet und es wird natriumgetrocknetes Toluol als Lösungsmittel verwendet. Der 35 µm dicke Polyarylatfilm wird mit einem Tauchverfahren (Polyarylat/Toluol, Masseverhältnis 1:18, Prozeßtemperatur 80°C) unter Stickstoffatmosphäre aufgebracht, mit nachfolgendem Temperprozeß von 160°C 10 min getrocknet. Alle 4 Seitenkanten sind mit dem 3,5 µm dicken Polyarylatfilm bedeckt. Das Elastizitätsmodul beträgt 2400 N/mm² und die Oberfläche weist eine Welligkeit von 19 nm und eine Rauhigkeit R_{T} von 10 nm auf. Die optische Retardation beträgt 8 nm.

### Bezugszeichen

- 1: Glasfolie
- 2: Glasfolienoberfläche
- 3: Glaskante
- 4: Polymerfilm
- 5: Randwulst
- 10: Glaszug
- 11: Glastank
- 12: Ziehdüse
- 13: Kühlstrecke
- 14: Walzen
- 15: Glasfolie
- 16: Pufferstrecke
- 20: Transportrollen
- 21: Walzen
- 22: Oberflächenbehandlungsaggregat
- 23: Temperiereinheit
- 24: Beschichtungsmodul
- 25: Polymer
- 26: Flachdüse
- 27: Übertragerwalze
- 28: erste Trockenstrecke
- 29: Absaugung
- 30: UV-Belichtungsstrecke
- 31: zweite Trockenstrecke
- 32: Zwischenlagenabroller
- 33: Aufwickeleinheit

## Patentansprüche

1. Glas-Kunststoff-Verbundfolie, insbesondere zur Verwendung in elektronischen Bauteilen und Geräten, beispielsweise Displays, aus einer Glasfolie, die eine Dicke zwischen 10 µm und 500 µm aufweist, und einer unmittelbar auf mindestens einer ihrer Seitenflächen aufgebrachten Polymerschicht, die eine Dicke zwischen 1 µm und 200 µm aufweist, **dadurch gekennzeichnet**, daß mindestens eine Seite an ihrer Oberfläche eine Welligkeit geringer als 100 nm und eine Rauhigkeit R_{T} < 30 nm aufweist und daß die optische Retardation nicht mehr als 20 nm beträgt.

2. Glas-Kunststoff-Verbundfolie nach Anspruch 1, **dadurch gekennzeichnet**, daß beide Seiten an ihrer Oberfläche eine Welligkeit geringer 100 nm und eine Rauhigkeit R_{T} geringer als 30 nm aufweisen.

3. Glas-Kunststoff-Verbundfolie nach Anspruch 1 oder 2, **dadurch gekennzeichnet**, daß die Glasdicke 10 bis 400 µm, bevorzugt 10 bis 200 µm, besonders bevorzugt 10 bis 100 µm beträgt.

4. Glas-Kunststoff-Verbundfolie nach einem der Ansprüche 1 bis 3, **dadurch gekennzeichnet**, daß die Dicke der Polymerschicht 2 bis 100 µm, bevorzugt 2 bis 50 µm beträgt.

5. Glas-Kunststoff-Verbundfolie nach einem der Ansprüche 1 bis 4, **dadurch gekennzeichnet**, daß die Folie auch auf mindestens einer Kante die Polymerschicht aufweist.

6. Glas-Kunststoff-Verbundfolie nach einem der Ansprüche 1 bis 5, **dadurch gekennzeichnet**, daß die Polymerschicht ein Elastizitätsmodul <5.000 N/mm², bevorzugt <2.600 N/mm², besonders bevorzugt < 1.500 N/mm² aufweist.

7. Glas-Kunststoff-Verbundfolie nach einem der Ansprüche 1 bis 6, **dadurch gekennzeichnet**, daß die Transmission der Glas-Kunststoff-Verbundfolie mehr als 90 % der unbeschichteten Glasfolie beträgt und die Trübung durch die Polymerbeschichtung um weniger als 1 % zunimmt.

8. Glas-Kunststoff-Verbundfolie nach einem der Ansprüche 1 bis 7, **dadurch gekennzeichnet**, daß die Rauhigkeit der Oberfläche R_{T}≤20 nm, bevorzugt ≤10 nm ist, die Welligkeit der Oberfläche ≤80 nm, bevorzugt ≤50 nm, ist und die optische Retardation nicht mehr als 15 nm beträgt.

9. Glas-Kunststoff-Verbundfolie nach einem der Ansprüche 1 bis 8, **dadurch gekennzeichnet**, daß im Dauergebrauch die Folie bis 130°C temperaturbeständig ist, bei kurzzeitiger Erwärmung die Folie bis 140°C, bevorzugt 180°C, besonders bevorzugt 200°C, temperaturbeständig ist.

10. Glas-Kunststoff-Verbundfolie nach einem der Ansprüche 1 bis 9, **dadurch gekennzeichnet**, daß die Polymerschicht aus einem Siliconpolymer, einem Sol-Gel-Polymer, einem Polycarbonat, einem Polyethersulfon, einem Polyacrylat, einem Polyimid, einem Cycloolefincopolymer oder einem Polyarylat besteht.

11. Glas-Kunststoff-Verbundfolie nach einem der Ansprüche 1 bis 10, **dadurch gekennzeichnet**, daß die Glasfolie aus einem Borosilikatglas, bevorzugt einem alkalifreien Borosilikatglas besteht.

12. Verfahren zur Herstellung einer Glas-Kunststoff-Verbundfolie nach einem der Ansprüche 1 bis 11 mit den Schritten:
- Herstellen einer Glasfolie einer Dicke von 10 bis 500 µm im Down-draw-Prozeß mit einer Ziehgeschwindigkeit von 2 bis 12 m/s;
- Vorbehandeln der Glasfolienoberfläche;
- direktes Aufbringen einer 1 bis 200 µm dicken Polymerschicht in der flüssigen Phase;
- Vereinzeln der polymerbeschichteten Glasfolie.

13. Verfahren zur Herstellung einer Glas-Kunststoff-Verbundfolie nach einem der Ansprüche 1 bis 11 mit den Schritten:
- Herstellen einer Glasfolie einer Dicke von 10 bis 500 µm im Down Draw-Prozeß mit einer Ziehgeschwindigkeit von 2 bis 12 m/s;
- Vereinzeln der Glasfolie;
- Vorbehandeln der Glasfolienoberfläche;
- direktes Aufbringen einer 1 bis 200 µm dicken Polymerschicht in der flüssigen Phase.

14. Verfahren nach Anspruch 13, **dadurch gekennzeichnet**, daß das Aufbringen der Polymerschicht durch Schleudern oder durch Sprühschleudern geschieht.

15. Verfahren nach Anspruch 12 oder 13, **dadurch gekennzeichnet**, daß das Aufbringen der Polymerschicht durch Aufgießen oder Aufwalzen oder Sprühen oder Tauchen geschieht.

16. Verfahren nach einem der Ansprüche 12 bis 15, **dadurch gekennzeichnet**, daß zusätzlich zur Seitenfläche mindestens eine Kante beschichtet wird.

17. Verfahren nach einem der Ansprüche 12 bis 16, **dadurch gekennzeichnet**, daß eine Glasfolie einer Dicke von 10 bis 400 µm, bevorzugt 10 bis 200 µm, besonders bevorzugt 10 bis 100 µm am Glaszug im Down-draw-Prozeß hergestellt wird.

18. Verfahren nach einem der Ansprüche 12 bis 17, **dadurch gekennzeichnet**, daß das Beschichten zu einer Polymerschichtdicke von 2 bis 100 µm, bevorzugt 2 bis 50 µm führt.

19. Verfahren nach einem der Ansprüche 12 bis 18, **dadurch gekennzeichnet**, daß die Oberflächenbehandlung vor dem Beschichten als UV-Bestrahlung in einer ozonhaltigen Atmosphäre oder als Corona-Behandlung oder als Beflammen durchgeführt wird.

20. Verfahren nach einem der Ansprüche 12 bis 19, **dadurch gekennzeichnet**, daß nach dem Beschichten die Polymerbeschichtung mit Hilfe von UV-Strahlung ausgehärtet wird und/oder unter Wärmeeinwirkung getrocknet wird.

21. Verfahren nach einem der Ansprüche 12 bis 20, **dadurch gekennzeichnet,** daß als Polymer ein Siliconpolymer, ein Sol-Gel-Polymer, ein Polycarbonat, ein Polyethersulfon, ein Polyacrylat, ein Polyimid, ein Cycloolefincopolymer oder ein Polyarylat aufgetragen wird.

22. Verfahren nach einem der Ansprüche 12 bis 21, **dadurch gekennzeichnet**, daß für die Glasfolienherstellung ein Borosilikatglas, vorzugsweise ein alkalifreies Borosilikatglas verwendet wird.

23. Verwendung der Glas-Kunststoff-Verbundfolie nach einem der Ansprüche 1 bis 10 zur Herstellung elektronischer Bauteile und optoelektronischer Geräte, insbesondere auf Basis von Flüssigkristallen oder lichtemittierenden Schichten.
